# EUROPEAN PATENT SPECIFICATION

(11) **EP 2 266 306 B1**
(45) Date of publication and mention of the grant of the patent: **15.08.2012**
(21) Application number: 09729147.0
(22) Date of filing: 02.04.2009
(51) Int. Cl.: H04M 15/00, H04W 88/02

(54) **SOFTWARE TRIAL IN A MOBILE HANDSET**
SOFTWARETEST BEI EINEM MOBILFUNKGERÄT
ESSAI DE LOGICIEL DANS UN COMBINÉ MOBILE

(30) Priority: 03.04.2008 US 42221 P; 14.08.2008 US 191904
(43) Date of publication of application: 29.12.2010
(73) Proprietor: Cequint, Inc., Seattle, WA 98101 (US)
(72) Inventor: GOSSELIN, Mark H., Seattle WA 98112 (US); MALISKA, Thomas P., Olympia WA 98516 (US)
(74) Representative: Cordina, Kevin John
(86) International application number: PCT/US2009/039352
(87) International publication number: WO 2009/124207

(56) References cited:
- US-A1- 2007 149 174

## Description

### PRIORITY CLAIM

This application claims the benefit of U.S. Provisional Application Ser. No. 61/042,221 filed 3 April 2008 and U.S. Patent Application Serial No. 12/191,904 filed August 14, 2008, the contents of which are hereby incorporated by reference.

### BACKGROUND

Free trials are a commonplace method used to market software. However, barriers exist to the use of free trials for software deployed to run during an incoming call on a mobile device. For example, the provision of caller information, such as caller location or name, for an incoming call is managed by the call handler software provided by the handset manufacturer and programmed to cooperate with software and mobile network transmissions sent by the carrier. Caller information can be derived locally by software on a handset, on receipt of a call, as with use of the contacts directory on the handset or derivation of city and state from the phone number by products such as Cequint Inc.'s City ID™; caller information can also be added to the information transmitted with the call when it is processed on the network, during call transmission, as with CNAM. Typically, network-based applications and services, such as CNAM (caller name identification), have no footprint on the mobile handset. Such applications simply insert information into the information associated with an incoming call, and the handset displays that information. Methods for this are set forth in standards such as IS-771 and TIA-764. Typically, trial software on the mobile handset is handled by the application manager software on the handset (whether pre-installed, or downloaded). As such, commencing a trial requires that the user elect to enter the mobile handset applications manager, and launch the application, in order for the trial to start. This is an impediment to using such trial software during call transmission or for network-based information services, such as CNAM. Thus, because of the manual steps required of the user to commence such trials, and the automated and proprietary nature of the incoming call handler software, trial adoption of caller information software on handsets is uncommon. It is the purpose of the present invention to enable such adoption, for both pre-installed and network-based services, such as caller information.
US 2007/0149174 discloses a mobile wireless device including a service trial client to enable a user to select services for trial.

### SUMMARY

The present invention permits a user to experience applications for trial on the mobile handset for network applications and services (such as CNAM, offered to mobile carriers by network service providers such as Verisign) as well as for applications which operate on the mobile handset (such as City ID® and Name ID™ from Cequint, Inc.). The present invention also provides methods for trial and expiration that not only show the trial and expiration messages to the user, but which also automate the installation and/or deletion of the trial software. The trial software is launched, and the trial commenced, automatically, rather than requiring the user to manually install and/or launch the trial software. Initiation of the trial (and related trial and adoption messages to the user) are based on an autonomous trigger or device state appropriate to the type of software on trial. For example, initiation of a trial may occur on receipt of an incoming call or on activation of the handset, for advanced caller identification features; or when the incoming call handler is inactive for a period of time, for audio-visual or Internet-based applications; or when the user accesses phone setup menus or the mobile handset caller directory, for trial of advanced device management applications; or on detection of a connection to the mobile data network, for the trial of network features.

### BRIEF DESCRIPTION OF THE DRAWINGS

Preferred and alternative examples of the present invention are described in detail below with reference to the following drawings:

FIGURE 1 illustrates a schematic diagram of a wireless cellular network system formed in accordance with an embodiment of the present invention;

FIGURE 2 illustrates a block diagram of components of a mobile handset that includes a trial software client; and

FIGURE 3 illustrates a flow diagram of an example process performed by the systems shown in FIGURE 1 and 2.

### DETAILED DESCRIPTION OF THE PREFERRED EMBODIMENTS

One embodiment of the present invention permits a user to experience applications for trial on the mobile handset for both network services (such as CNAM offered to mobile carriers by network service providers such as Verisign) and for applications installed on the handset (such as City ID® and Name ID™ from Cequint, Inc.). The present invention also provides methods for trial and expiration that not only show the trial and expiration messages to the user, but which also automate the installation and/or deletion of the trial software. The trial software is launched, and the trial commences, based on an autonomous trigger, such as an incoming call or activation of the handset, rather than requiring the user to manually install and/or launch the trial application.

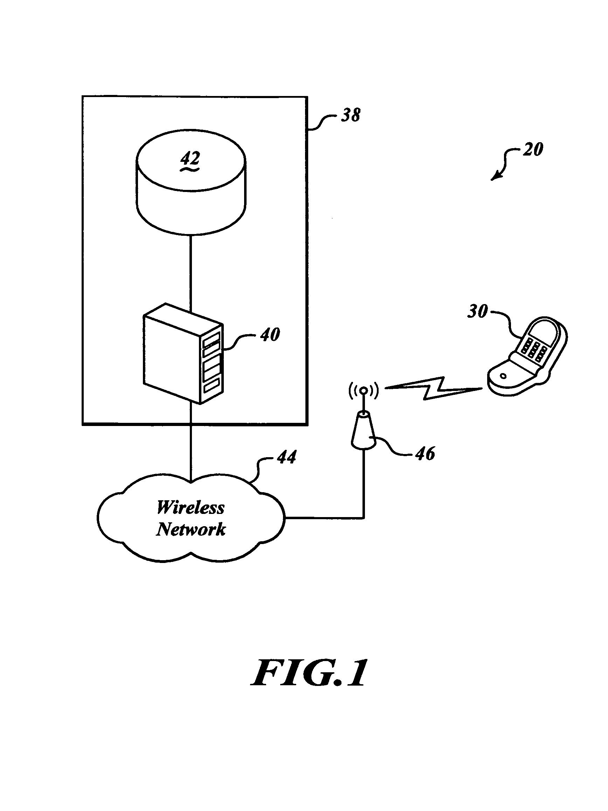

FIGURE 1 illustrates a wireless/cellular system 20 that includes one of many mobile handsets 30, wireless/cellular nodes (also known as Mobile Switching Centers or MSCs) 46, a wireless network 44 and a network provider 38. The handset 30 executes a trial application using a component stored on the handset 30 and network services provided by the network providers 38.

The mobile handset 30 may be a cell phone, mobile device, VoIP device, portable data assistant (PDA), or any electronic device that is capable of receiving and presenting network services provided by the network provider 38. The network provider 38 includes a server device 40 and a database 42. The server device 40 executes network services based on user and/or vendor's (network provider or mobile carrier) preferences stored in the database 42. Functions performed by the server device 40 and the data stored in the database 42 may be distributed to various components connected to the network 44 and transmission by the MSC 46.

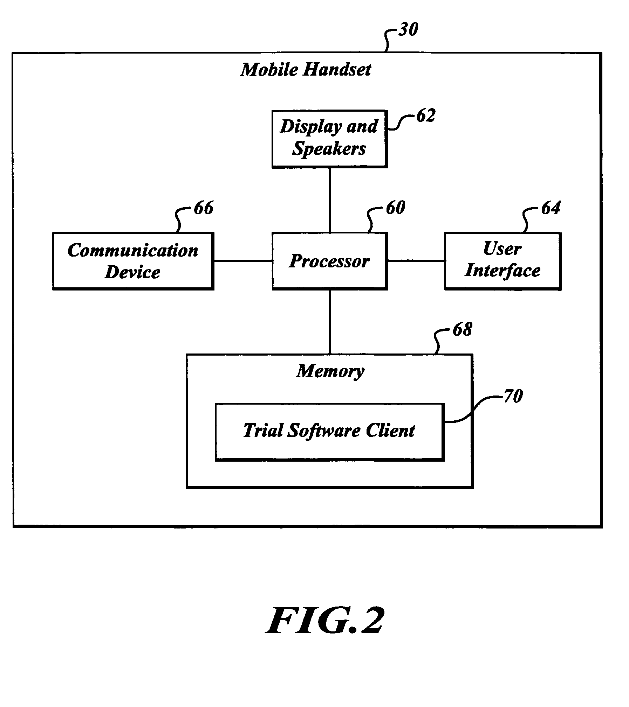

As shown in FIGURE 2, an example of the mobile handset 30 includes a processor 60, output devices 62 (display(s) and speaker(s)), a user interface 64, a communication device 66, and memory 68. The memory 68 includes a trial software client application component (TSC) 70 and one or more applications for trial 72, that when executed by the processor 60 performs the processes described below. The feature at trial may be, for example, an advanced caller identification feature such as caller name, or city and state, display on the handset during incoming calls. An application [the TMS] is required on the handset to permit the user to respond to the trial and expiration messages regarding adoption of the software and/or approve the related billing plan on the user's account. Note that the application need only operate to send an approval or denial from the user to the carrier's network server. This may be accomplished using a full data connection in the application, or with a message transmitted from the handset via SMS or a data channel. The handset 30 is preloaded with the TSC 70 and the one or more applications for trial 72 before the handset 30 is purchased, or the TSC 70 and the one or more applications for trial 72 are loaded by the user/owner of the handset 30. The TSC 70 may also be coded as part of the applications for trial on the handset; in either case the installation, activation and management of the applications for trial 72 is in conjunction with operation of the TSC 70. The TSC 70 may also be run on the handset as described herein, and used in conjunction with the trial of a network-based application 74, such as CNAM, which is stored on the server 40. The duration of the trial (and thus its expiration) can be determined by software on either the device or the network server using pre-configured settings relating to time or date; period of time; tracking the # of calls made or received on the handset; calendar periods; and so forth).

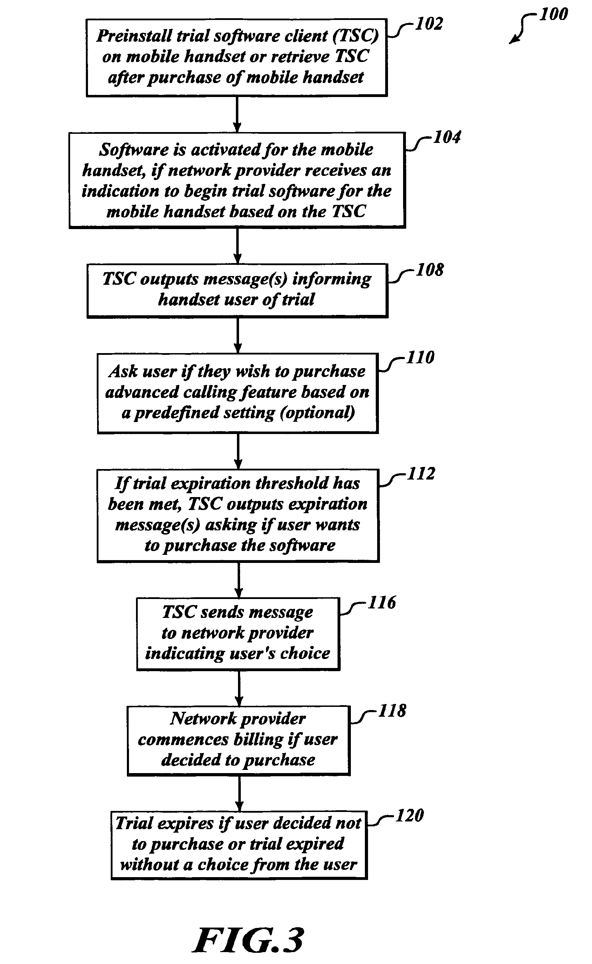

With a network service, such as CNAM, a client application (TSC 70) of small size (approximately 10kb) is installed on a mobile handset 30. In this example, the client application of the network service does not require storage of data files on the handset, but rather operates to turn on and off a setting on a service hosted by a network provider (server 40) (for example, Verisign, in the case of CNAM, which adds information, such as caller name or city & state information, to the incoming phone number for display on the handset 30). This includes pre-installation of the client application on a new handset, prior to purchase, or download of the application on an operating handset (block 102, FIGURE 3). On initialization of the application (e.g., at the time of purchase), the installed trial application informs the user that a free trial of the service was operating, for a limited period of time or number of calls (blocks 104 and 108). An adoption message for the trial will typically be displayed upon detection of an end of call state from the call handler software on the device. The user is asked if they wished to purchase the advanced calling feature as a network information service from one to many times during the trial period, depending on the configuration and carrier's marketing plan (decision block 112). If the user has not indicated a purchase and a trial expiration threshold (decision block 114) has been met, then the TSC 70 outputs an expiration message (block 116). Note that the expiration message is mandatory (in the sense that the subscriber must be given at least one adoption message during the trial period), while trial messages during the period of the trial (block 110) are additional. Also, the frequency of trial message display to the handset user may be balanced against the frequency of use of the trial software versus the need for direct and frequent advertising of the trial feature to the user.

If the user responds affirmatively to an adoption message (trial message) from the trial software ('YES') during the trial period, or on receipt of the expiration message, the TSC 70 sends a message to the CNAM service provider indicating the user's choice (block 118), upon which billing (or registration & authorization only for non-billed software) commences (block 120). In this step, the service is added to the user's monthly contract according to the payment terms set out in the offer, the user is registered as a user of the software with the carrier, and authorization for some period of ongoing use is given. A flag may be activated to indicate that the trial is to be turned off so that the trial software no longer displays messages to the user. The TSC trial software, related files or data could optionally be deleted from the handset if appropriate, once the trial has expired (block 122).

If the user responds negatively to an adoption message from the TSC trial software ('NO') during the trial period, the trial could optionally continue until the expiration notice appears. After the expiration response is sent, the trial expires automatically based on the network service if the user has not changed to a paid or subscription customer for the advanced calling feature associated with the trial. The TSC software, related files or data could optionally be deleted from the handset if appropriate, once the trial period has expired.

This method and system enables trial operation and user adoption of network services that traditionally have no software installed on the mobile handset, and can be configured to run one or more such trials for advanced call features from these network services. Note that a period of use for the application for trial may be set after transmitting the response to the network carrier. Also, the trial and/or expiration messages that are displayed on the mobile device may be presented on the display screen, or played as audible messages. Also, that the trial and/or expiration messages may contain prompts to respond using the keypad, display buttons, touchscreen prompts, or voice commands. Such prompts and messages may be generated on the mobile device or handset, or directed by the carrier or software provider to the mobile device over the network as data, IM, calls. Also, the network carrier may respond with a code for authentication or registration of the software for trial, such as confirmation of a billing code, or may simply record the adoption of the software for trial by the user in the user's configuration or profile (for software that is not billed, or for which a extended period of non-paying use is granted).

With an application installed on the mobile handset, such as Cequint's NameID™ or CityID®, the trial would proceed in a similar fashion. A client application 72 of small size (approximately 30 kb) would be installed on the mobile handset along with any data files required to operate the advanced calling feature. This includes pre-installation of the client application on a new handset, prior to purchase, or download of the application on an operating handset. On initialization of the application (e.g., at the time of purchase), the installed trial application would inform the user that a free trial of the service was operating, for a limited period of time and/or number of calls. In the trial and expiration messages, the user would be asked if they wished to purchase the advanced calling feature as a network information service from one to many times during the trial period, depending on the configuration and carrier's marketing plan. Note that the expiration message is mandatory (in the sense that the subscriber must be given at least one adoption message during the trial period), while trial messages during the period of the trial (block 110) are additional. Also, the frequency of trial message display to the handset user may be balanced against the frequency of use of the trial software versus the need for direct and frequent advertising of the trial feature to the user.

If the user responds affirmatively to an adoption message ('YES') during the trial period, or on receipt of the expiration message, the trial software client sends a message to the CNAM service provider indicating the user's choice, upon which billing commences (and the service is added to the user's monthly contract according to the payment terms). This would typically be done by setting a billing authorization in the subscriber's account data. A flag may indicate that the trial is to be turned off so that the trial software no longer displays messages to the user. The trial software, related files and data could optionally be deleted from the handset. Optionally, the database might be deleted to free storage and memory space, while the application, which is of smaller size, retained against the eventuality the user wishes to obtain the service later; or vice versa, in the event that the data is used by other applications on the handset.

If the user responds negatively to an adoption message ('NO') during the trial period, the trial could optionally continue until the expiration notice appears. After the expiration response is sent, the trial of the network service expires automatically and billing and authorization codes in the subscribers' account (typically with the mobile carrier) are set to off. This will continue unless the user later changes to a paid or subscription customer for the application for trial, such as an advanced calling feature. Also, in processing the response from the subscriber to a trial or adoption message, the network carrier may respond with a code for authentication or registration of the software for trial, such as confirmation of a billing code, or may simply record the adoption of the software for trial by the user in the user's configuration or profile (for software that is not billed, or for which a extended period of non-paying use is granted).

For the trial of an application on the mobile device or of a network feature, the TSC and application for trial can be installed automatically in a variety of ways. In most cases, the TSC and application for trial will begin to operate on activation of the telephone, or on receipt of or end-of incoming calls, depending on the software or network feature to be demonstrated by the application for trial. Similarly trial conditions for displaying trial and adoption messages with the TSC can take many forms. The TSC can be programmed to detect many types of trial conditions, and trigger the display trial messages when they occur. In one example, an application displaying caller information operates for the user on first use or activation of the mobile handset, with a trial condition, for example, set for the lesser of a set period of time (e.g., 15 days) or number of calls (e.g., first five incoming calls), at which point an expiration message ending the trial and offering a subscription or payment for adoption of the advanced calling feature is presented to the user. Another trial condition, by way of example, could be based on detection of end-of-call, or on a device state such as no call handler activity (no voice call on the line) for five minutes, and so forth, resulting in the display of an trial or adoption message. Finally, the trial expiration message may be programmed to display at the end of the trial conditions, which trial condition may be determined by time, activity on the mobile device, a signal or message from the network provider, a billing code, a device state, or some other condition that is automatically detected by the TSC.

Also, on receiving a negative response to the trial, the software automatically deletes the database; in the case of an advanced calling feature, removal of a database may relieve ∼300K of storage on the handset. Freeing up available storage and memory space on the handset in a trial application is a benefit. Note that a period of use for the application for trial may be set after transmitting the response to the network carrier. Also, the trial and/or expiration messages that are displayed on the mobile device may be on the display screen, or received as audible messages. Also, that the trial and/or expiration messages may contain prompts to respond using the keypad, display buttons, or voice commands. Such prompts and messages may be generated on the mobile device or handset, or directed by the carrier or software provider to the mobile device over the network as data, IM, calls.

The TSC may be used to manage many types of mobile phone applications, both to enhance the user's awareness of the application and to guide adoption and/or purchase of the offered software or services. The provision of caller information is but one of many possible mobile services whose adoption is enhanced by the present invention. Trial and adoption of other types of applications may be managed by the TSC provided that the trial (with related trial and adoption messages to the user) is based on an autonomous trigger or device state appropriate to prompt the user regarding the type of software for trial. For example, initiation of a trial may occur on receipt of an incoming call or on activation of the handset, for advanced caller identification features such as caller name identification or location; or when the incoming call handler is inactive for a period of time, for games, audio-visual, or Internet-based applications that typically operate when the voice channel is inactive; or when the user first accesses phone setup menus or the mobile handset caller directory, for trial of advanced or enhanced device management applications. Another device state condition that may be detected independently or in combination is the presence a connection to the mobile data network, since a network connection is essential for the trial of network features such as online support, data backup, CNAM and other line information queries, billing queries from the mobile device, etc.

## Claims

1. A method comprising:
automatically activating one or more applications for trial for a caller identification feature in conjunction with a trial software client on a mobile device;
detecting a state of call handler software on the mobile device;
displaying one or more messages on the mobile device in response to the detected state of said call handler software, at least one of said displayed messages comprising a request for adoption of the one or more applications for trial.

2. The method of Claim 1, further comprising:
obtaining a response from a user of the mobile device to the request for adoption of the one or more applications for trial.

3. The method of Claim 2, further comprising:
sending the obtained response to a network carrier.

4. The method of Claim 2, further comprising:
setting one of an authorization or registration code after obtaining the response.

5. The method of Claim 1, wherein one of the applications for trial is a network feature.

6. The method of Claim 1, wherein one of the applications for trial is installed on the mobile device.

7. The method of Claim 1, further comprising:
deactivating the trial software client application, if the predefined trial period has expired and no positive response has been obtained from the user.

8. A computer program product residing on computer readable medium located on a mobile handset device, the computer program product performs a method comprising:
automatically activating one or more applications for trial on a mobile device;
automatically activating a trial software client on the mobile device based on the activated one or more applications for trial;
displaying one or more messages on the mobile device based on the activated trial software client, at least one of said messages comprising a request for adoption of the one or more applications for trial.

9. The product of Claim 8, further comprising:
obtaining a response from a user of the mobile device to the request for adoption of the trial application.

10. The product of Claim 9, further comprising:
sending the obtained response to a network carrier.

11. The product of Claim 9, further comprising:
setting one of an authorization or registration code after obtaining the response.

12. The product of Claim 8, further comprising:
deactivating all or a portion of the application for trial, if the predefined trial period has expired and no positive response has been obtained from the user.

13. A mobile handset device comprising:
a means for activating one or more applications for trial;
a means for activating a trial software client on a mobile device based on the activated one or more applications for trial;
a means for sending an expiration message to the user of the mobile device by the activated trial software client, the expiration message comprises a request for adoption of the one or more applications.

14. The device of Claim 13, further comprising:
a means for obtaining a response from the user of the mobile device to the request for adoption of the application for trial.

15. The device of Claim 14, further comprising:
a means for sending the obtained response to a network carrier.

## Patentansprüche

1. Ein Verfahren, das beinhaltet:
automatisches Aktivieren einer oder mehrerer Anwendungen zum Testen für ein Anruferkennungsmerkmal zusammen mit einem Testsoftware-Client auf einem mobilen Gerät;
Erkennen eines Status einer Anrufverarbeitungssoftware auf dem mobilen Gerät;
Anzeigen einer oder mehrerer Nachrichten auf dem mobilen Gerät als Antwort auf den erkannten Status der Anrufverarbeitungssoftware, wobei mindestens eine der angezeigten Nachrichten eine Anforderung der Annahme der einen oder der mehreren Anwendungen zum Testen beinhaltet.

2. Verfahren nach Anspruch 1, das ferner beinhaltet:
Erhalten einer Antwort von einem Nutzer des mobilen Geräts auf die Anforderung der Annahme der einen oder der mehreren Anwendungen zum Testen.

3. Verfahren nach Anspruch 2, das ferner beinhaltet:
Senden der erhaltenen Antwort an einen Netzbetreiber.

4. Verfahren nach Anspruch 2, das ferner beinhaltet:
Einrichten eines Autorisierungs- oder eines Registrierungscodes nach Erhalten der Antwort.

5. Verfahren nach Anspruch 1, wobei gekennzeichnet, dass eine der Anwendungen zum Testen ein Netzmerkmal ist.

6. Verfahren nach Anspruch 1, wobei gekennzeichnet, dass eine der Anwendungen zum Testen auf dem mobilen Gerät installiert ist.

7. Verfahren nach Anspruch 1, das ferner beinhaltet:
Deaktivieren der Testsoftware-Client-Anwendung, falls der vordefinierte Testzeitraum abgelaufen ist und vom Nutzer keine positive Antwort erhalten wurde.

8. Ein Computerprogrammprodukt, das auf einem computerlesbaren Medium gespeichert ist, das sich auf einem mobilen Handgerät befindet, wobei das Computerprogrammprodukt ein Verfahren durchführt, das beinhaltet:
automatisches Aktivieren einer oder mehrerer Anwendungen zum Testen auf einem mobilen Gerät;
automatisches Aktivieren eines Testsoftware-Clients auf dem mobilen Gerät basierend auf der aktivierten einen oder den aktivierten mehreren Anwendungen zum Testen;
Anzeigen einer oder mehrerer Nachrichten auf dem mobilen Gerät basierend auf dem aktivierten Testsoftware-Client, wobei mindestens eine der Nachrichten eine Anforderung der Annahme der einen oder der mehreren Anwendungen zum Testen beinhaltet.

9. Produkt nach Anspruch 8, das ferner beinhaltet:
Erhalten einer Antwort von einem Nutzer des mobilen Geräts auf die Anforderung der Annahme der Testanwendung.

10. Produkt nach Anspruch 9, das ferner beinhaltet:
Senden der erhaltenen Antwort an einen Netzbetreiber.

11. Produkt nach Anspruch 9, das ferner beinhaltet:
Einrichten eines Autorisierungs- oder eines Registrierungscodes nach Erhalten der Antwort.

12. Produkt nach Anspruch 8, das ferner beinhaltet:
Deaktivieren der gesamten oder eines Teils der Anwendung zum Testen, falls der vordefinierte Testzeitraum abgelaufen ist und vom Nutzer keine positive Antwort erhalten wurde.

13. Mobiles Handgerät, das beinhaltet:
ein Mittel zum Aktivieren einer oder mehrerer Anwendungen zum Testen;
ein Mittel zum Aktivieren eines Testsoftware-Clients auf einem mobilen Gerät basierend auf der aktivierten einen oder den aktivierten mehreren Anwendungen zum Testen;
ein Mittel zum Senden einer Ablaufnachricht an den Nutzer des mobilen Geräts durch den aktivierten Testsoftware-Client, wobei die Ablaufnachricht eine Anforderung der Annahme der einen oder der mehreren Anwendungen beinhaltet.

14. Gerät nach Anspruch 13, das ferner beinhaltet:
ein Mittel zum Erhalten einer Antwort vom Nutzer des mobilen Geräts auf die Anforderung der Annahme der Anwendung zum Testen.

15. Gerät nach Anspruch 14, das ferner beinhaltet:
ein Mittel zum Senden der erhaltenen Antwort an einen Netzbetreiber.

## Revendications

1. Procédé comprenant :
l'activation automatique d'une ou plusieurs applications en essai pour une fonction d'identification d'appelant en conjonction avec un client logiciel d'essai sur un dispositif mobile ;
la détection d'un état de logiciel de gestionnaire d'appel sur le dispositif mobile ;
l'affichage d'un ou plusieurs messages sur le dispositif mobile en réponse à l'état détecté dudit logiciel de gestionnaire d'appel, au moins un desdits messages affichés comprenant une demande d'adoption des ou plusieurs applications en essai.

2. Procédé selon la revendication 1, comprenant en outre :
l'obtention d'une réponse d'un utilisateur du dispositif mobile à la demande d'adoption des ou plusieurs applications en essai.

3. Procédé selon la revendication 2, comprenant en outre :
l'envoi de la réponse obtenue à un opérateur de réseau.

4. Procédé selon la revendication 2, comprenant en outre :
l'établissement d'un code d'autorisation ou d'enregistrement après l'obtention de la réponse.

5. Procédé selon la revendication 1, dans lequel l'une des applications en essai est une fonction réseau.

6. Procédé selon la revendication 1, dans lequel l'une des applications en essai est installée sur le dispositif mobile.

7. Procédé selon la revendication 1, comprenant en outre :
la désactivation de l'application client de logiciel d'essai, si la période d'essai prédéfinie a expiré et qu'aucune réponse positive n'a été obtenue de l'utilisateur.

8. Produit de programme informatique résidant sur un support lisible par ordinateur situé sur un dispositif de téléphone mobile, le produit de programme informatique réalisant un procédé comprenant :
l'activation automatique d'une ou plusieurs applications en essai sur un dispositif mobile ;
l'activation automatique d'un client logiciel d'essai sur le dispositif mobile d'après les une ou plusieurs applications en essai activées ;
l'affichage d'un ou plusieurs messages sur le dispositif mobile d'après le client logiciel d'essai activé, au moins un desdits messages comprenant une demande d'adoption des une ou plusieurs applications en essai.

9. Produit selon la revendication 8, comprenant en outre :
l'obtention d'une réponse d'un utilisateur du dispositif mobile à la demande d'adoption de l'application d'essai.

10. Produit selon la revendication 9, comprenant en outre :
l'envoi de la réponse obtenue à un opérateur de réseau.

11. Produit selon la revendication 9, comprenant en outre :
l'établissement de l'un d'un code d'autorisation ou d'enregistrement après l'obtention de la réponse.

12. Produit selon la revendication 8, comprenant en outre :
la désactivation de tout ou partie de l'application en essai si la période d'essai prédéfinie a expiré et qu'aucune réponse positive n'a été obtenue de l'utilisateur.

13. Dispositif de téléphone mobile comprenant :
un moyen permettant d'activer une ou plusieurs applications en essai ;
un moyen permettant d'activer un client logiciel d'essai sur un dispositif mobile d'après les une ou plusieurs applications en essai activées ;
un moyen permettant d'envoyer un message d'expiration à l'utilisateur du dispositif mobile par le client logiciel d'essai activé, le message d'expiration comprenant une demande d'adoption des une ou plusieurs applications.

14. Dispositif selon la revendication 13, comprenant en outre :
un moyen permettant d'obtenir une réponse de l'utilisateur du dispositif mobile à la demande d'adoption de l'application en essai.

15. Dispositif selon la revendication 14, comprenant en outre :
un moyen permettant d'envoyer la réponse obtenue à un opérateur de réseau.
